# EUROPEAN PATENT SPECIFICATION

(11) **EP 1 466 075 B1**
(45) Date of publication and mention of the grant of the patent: **21.05.2008**
(21) Application number: 03701194.7
(22) Date of filing: 13.01.2003
(51) Int. Cl.: E21B 44/00, H04Q 9/00

(54) **REMOTE CONTROL OF DRILLING RIGS**
FERNSTEUERUNG VON BOHRANLAGEN
COMMANDE A DISTANCE D'UN APPAREIL DE FORAGE

(30) Priority: 14.01.2002 SE 0200084; 14.01.2002 SE 0200087
(43) Date of publication of application: 13.10.2004
(73) Proprietor: Atlas Copco Rock Drills AB, 701 91 Örebro (SE)
(72) Inventor: RAMSTRÖM, Mikael, S-703 78 ÖREBRO (SE); SANDSTRÖM, Lars, S-716 31 FJUGESTA (SE); PETTERSSON, Roland, S-703 48 ÖREBRO (SE); KNUTSSON, Jan, S-715 31 ODENSBACKEN (SE)
(74) Representative: Avellan-Hultman, Olle
(86) International application number: PCT/SE2003/000031
(87) International publication number: WO 2003/058029

(56) References cited:
- EP-A1- 0 825 330
- EP-A1- 1 273 719
- DE-A1- 10 042 934
- DATABASE WPI Week 199902, Derwent Publications Ltd., London, GB; Class T01, AN 1999-016642, XP002978841 & JP 10 285 665 A (MEIDENSHA CORP) 23 October 1998

## Description

### Field of the invention

The invention relates to a system for enabling remote control of drilling rigs of the kind defined in the preamble of claim 1.

### Background of the invention

It is more and more common to control drilling rigs remotely, since the drilling rigs are becoming more automated. The operator, or person responsible for the operation of the drilling rig, is more or less just supervising the drilling rig, and he or she takes action only when needed, for example when a failure has occurred. Therefore it is rational and suitable to assemble the operators at the same place, for example in a control centre in or in relation to the mine. All the required surveillance and monitoring of the drilling rigs, and also some elementary and common operations, are thus performed in the control centre by means of remote control.

When implementing remote control of drilling rigs a vital consideration is to ensure reliable communication. A control command sent by the operator of the drilling rig has to arrive at the drilling rig in time. Conversely, messages such as an alarm or a warning from the drilling rig to the operator has to be delivered promptly.

One presently known system, used in drilling rigs for enabling remote control, is the PROFIBUS^{®} system, available from Siemens. PROFIBUS^{®} is a bus system for carrying out communication in small cell networks and in field devices.

There are however several disadvantages with the known systems. One disadvantage is that, PROFIBUS^{®}, for example, is a more specialised technique than what would be desired.

Further yet, in the PROFIBUS^{®} system the network for remote control of a drilling rig is a separate network, which fact makes this technique quite expensive to employ. The network used for remote control is thus isolated from other networks.

Thus there exists a need to provide a system in which a simple, non-expensive and preferably standardised method for data communication is used, enabling an inexpensive and easily implemented way to carry out remote control of drilling rigs, which system further ensures a safe communication of data.
EP-1 319 297, filed on 17.09.2001 and published on 28.03.2002, discloses a system for remote control of drilling rigs.

### Summary of the invention

It is an object of the present invention to provide a system for remote control of drilling rigs that solves the above mentioned problems. In particular it is an object of the present invention to provide a system for enabling remote control of drilling rigs in a safe manner.

These objects are achieved, according to a first aspect of the invention, by a system for remote control of drilling rigs as claimed in claim 1.

The present invention provides an inexpensive way to implement remote control of drilling rigs, where an existing infrastructure may be employed. The operator of the drilling rig, and other users with access to the drilling rig, or with access to information retrieval from the drilling rig, may share the capacity available within the network, thus avoiding the need of a separate network for the remote control of a drilling rig. The safe operation of the drilling rig is ensured by a control unit, which functions to block or prioritise traffic in accordance with urgency or priority of different kinds of traffic.

The system in accordance with the present invention includes a control unit that is arranged to control the data communication between the remotely located control centre and the drilling rig, as well as other traffic directed to and/or from the remotely located control centre and to and/or from the drilling rig. Thereby a safe operation of the drilling rig is ensured in that it is made sure that crucial data is delivered correctly and in time.

In accordance with another embodiment of the invention, the control unit is arranged to prioritise traffic between the remotely located control centre and the drilling rig. This provides a system which does not need to be isolated from networks other than the network used for enabling remote control of the drilling rig. Instead different traffic may be mixed and sent when there is enough capacity available in the network. Again, this provides a system that is easily implemented, for example in an existing infrastructure.

In accordance with another embodiment of the invention the control unit is arranged to deny other traffic when there is traffic between the remotely located control centre and the drilling rig. This feature provides a supplementary security measure by denying all traffic except the traffic between the remotely located control centre and the drilling rig. The total capacity of the network is thus assigned to this particular communication, thereby ensuring the data transmission. Further, the network may be properly dimensioned, so as to not provide for excess capacity.

In accordance with one embodiment of the system for remote control of drilling rigs the system is arranged to utilise a standardised data communication method for communication between the remotely located control centre and the drilling rig. This gives a system that is easily implemented, for example in an existing infrastructure. Further, utilising a standardised data communication method for communication between the remotely located control centre and the drilling rig provides an inexpensive and simple way to implement remote control of drilling rigs.

In accordance with another embodiment of the invention the standardised data communication method is a method commonly used within computer environments. For example, one of the following methods could be used: Ethernet or Token ring. These are well known methods and provide an inexpensive way to implement remote control of drilling rigs.

In accordance with another embodiment of the invention the system for remote control of drilling rigs is connected to other networks utilising the same standardised technique for data communication. This gives a simple and non-expensive way to interconnect the drilling rig and control centre to, for example, an office or support centre.

In accordance with another embodiment of the invention the control unit gives priority to control commands over other traffic between the remotely located control centre and the drilling rig. If the traffic between the remotely located control centre and the drilling rig comprises additional traffic besides control commands, this feature ensures that critical information is prioritised.

The additional traffic between the remotely located control centre and the drilling rig could for example comprise image and/or sound data relating to the drilling rig, and recorded by a camera and/or a microphone. This additional traffic provides a convenient way to supervise the drilling rig, while giving the option to exclude such data, or give such data low priority, if there is other, more critical data in need to be transmitted.

In accordance with another embodiment of the invention the control unit is a server. The control unit being a server provides a simple and convenient way to implement the traffic controlling. The server can easily be updated, and could be installed on any commercially available computer.

The invention is also related to a control unit for controlling the traffic within a system for remote control of drilling rigs. Advantages similar to the above described are achieved with such a control unit. Further advantages achieved by the present invention will become clear in the following description.

### Brief description of the drawings

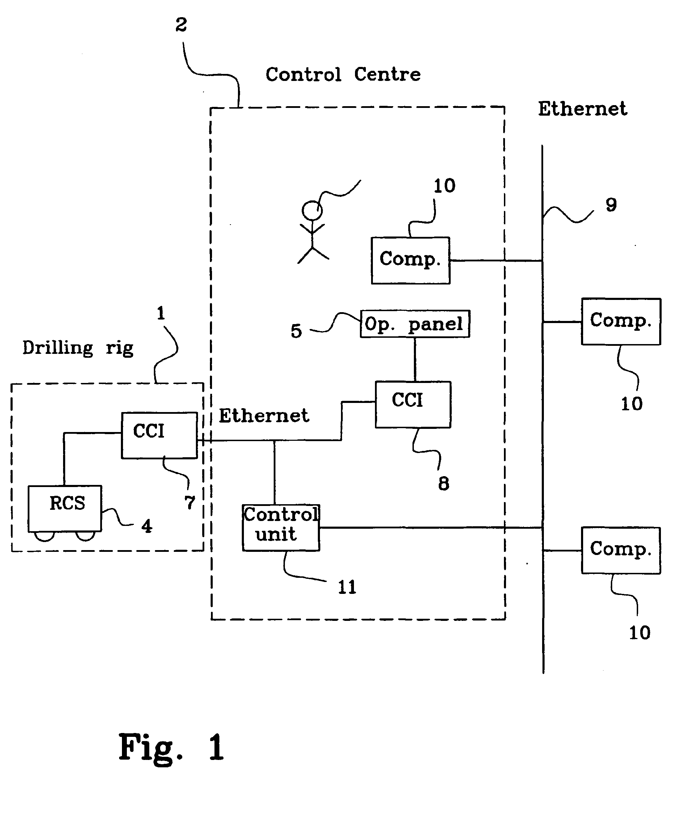

Fig. 1 shows the system including the inventive control unit for controlling traffic within the system in accordance with the present invention.

### Detailed description of preferred embodiments

In order to obtain a better understanding of the present invention, a brief description of Ethernet, which is used in the preferred embodiment of the present invention, is described. However, it is to be understood that other methods for communicating data may be used as well. Ethernet (specified in IEEE 802.3) is a common method for data communication, used for example in a local area network (LAN) or a VLAN (Virtual LAN) and is now recognised as an industry standard. It is thus a highly standardised technique, and frequently used in different computer environments, such as offices. In accordance with the Ethernet technique, a computer wishing to transmit data first checks whether the network has capacity available for the transmission. If the network does not have the capacity to transmit the desired data, the computer waits a specified amount of time, after which it again tries to transmit the data. The data is broken into packets and each packet is transmitted using a CSMA/CD (Carrier Sense Multiple Access/Collision Detect) algorithm until it arrives at the destination without colliding with any other packet. The bandwidth for an Ethernet network is about 10 Mbit/s, and higher data rates are possible, for example in fast Ethernet and gigabit Ethernet.

With reference to Fig. 1, a system showing the present invention is depicted. In accordance with the present invention, the Ethernet technique is used in order to communicate data, such as control information, between the operator and the drilling rig. As mentioned above, Ethernet is a standardised method, and is today used in many office environments, for example, and the protocol used is the likewise standardised TCP/IP (Transmission Control Protocol/Internet Protocol). It is thus a very commonly used method for communicating data and also a relatively inexpensive one. In accordance with the invention, the Ethernet technique is used in order to accomplish remote control of drilling rigs. The existing infrastructure may thus be used, providing a simple and easily implemented way to accomplish remote control of drilling rigs, and the same data communication method being utilised within the whole system.

A computer 4, RCS (Rig Control System), is provided in the drilling rig 1 controlling the operations of the drilling rig 1. This computer 4 ensures a secure and reliable functioning of the remote control of the drilling rig 1. A CAN (Controller Area Network) bus (not shown) is preferably used for the transfer of data between the computer RCS 4 and an interface CCI 7 (Common Communication Interface). A CAN bus is a two wire serial bus, suitable for use in particularly exposed environments, for example in noisy environments comprising considerable interference. The computer 4 is in turn connected to a signal converter, or an interface CCI 7, able to handle Ethernet communication. The CCI interface 7 converts the data from the CAN bus into a format usable within the Ethernet network. The control centre 2, from where an operator 3 controls the drilling rig 1, is also provided with a CCI interface 8, where the data is converted back to a CAN bus traffic format, and provided to the operator 3 by means of an operator panel 5, or navigation panel. This second conversion is performed since the CAN bus is preferably used in the control centre 2 as well. The operator 3 is thus able to operate the drilling rig 1 properly by giving control commands in a CAN bus format. These control commands are then transferred by means of Ethernet after said conversion. In the same way data, such as control commands, entered by the operator 3 is converted by the CCI interface 8 to a format usable within the Ethernet network, and then converted by the CCI interface 7 to a CAN bus traffic format.

Expressed differently, the CCI interface 7 is a signal converter listening to the traffic on the CAN bus. The CCI interface 7 converts data intended to the control centre 2, or to another destination within the system, to a format that can be transmitted by means of a standardised data communication method, such as Ethernet.

When using Ethernet, as shown in Fig. 1, it is easy to interconnect the network for remotely controlling a drilling rig 1 to other networks, as is also shown in the figure, and as will now be described. As explained above, a computer in a network utilising Ethernet and wishing to transmit data first checks whether the network has capacity available for the transmission. If the network does not have capacity to transmit the desired data, the computer waits a predetermined amount of time, after which time it again tries to transmit the data. When transmitting critical data, such as alarms or control commands, between the control centre 2 and the drilling rig 1, it is of course not applicable to wait for capacity to be available within the network. This problem is solved by means of a control unit 11 in accordance with the present invention, which is described below.

The drilling rig 1 is controlled and supervised by an operator 3 in a control centre 2, located remotely from the drilling rig 1. It is, as mentioned above, crucial that control commands and other data sent from the operator 3 to the drilling rig 1 is indeed transmitted, is transmitted in a secure manner, and it is in most cases important that the data is transmitted immediately without any delays. Likewise, it is important that the operator 3 receives information sent from the drilling rig 1 in a safe manner, information such as alarms and warnings. In accordance with the present invention a control unit 11 is provided for controlling the traffic between the drilling rig 1 and the control centre 2, and also for controlling other traffic occurring within the network, if any. Accordingly, a network 9, such as an office environment or a support centre, including one or more computers 10 may communicate data to and from the control centre 2 and to and from the drilling rig 1. This data may include, but is not limited to, log information, operating characteristics, operating information, failure reports etc. The network uses the same communication method as the network for remotely controlling the drilling rig 1, in the preferred embodiment Ethernet technique, and can thus easily be connected to it.

The control unit 11 may for example be a server, and the control unit 11 is arranged to control the data communication, or traffic, between the different computers 10, and the drilling rig 1. One important function performed by the control unit 11 is to ensure capacity for the communication between the control centre 2 and the drilling rig 1. In accordance with the present invention this function can be accomplished in a number of different ways.

The control unit 11 may block all other traffic occurring within the network when there is a need for a critical data communication. That is, traffic other than data between the control centre 2 and the drilling rig 1 is blocked in its entirety, when there is a need for data communication there between. Thus a person working at the office and wishing to retrieve for example run statistics from a certain drilling rig 1 is not allowed to retrieve the desired information if there is, or will soon be, a data communication between the drilling rig 1 and the control centre 2. Thus a secure operation of the drilling rig 1 is ensured.

Alternatively, the control unit 11 may give different priorities to different kinds of data. For example, control commands sent from an operator 3 is always prioritised over all other kinds of traffic. Thus the operation of the drilling rig 1 is guaranteed. In the same way, data from the drilling rig 1 may be given priority over other traffic, ensuring that the operator 3 receives failure reports, alarms and warnings etc. The data communicated within the system may thus be mixed, that is, data critical for the operation of the drilling rig 1 may be mixed with data non-critical to the operation. The need for a separate network for the remote control of a drilling rig 1 is thus eliminated.

The drilling rig 1 may be provided with a camera (not shown) and/or a microphone (not shown) for enabling a convenient supervision means. The information from the camera and/or microphone may be given a certain priority, for example a lower priority than control commands to the drilling rig 1 and lower priority than alarms from the drilling rig 1, but higher priority than information transmitted from a computer 10 not located at the control centre 2. The control unit 11 may be pre-programmed to give a certain priority to a certain kind of traffic, or this priority may be included in the transmitted data.

In accordance with the present invention, a simplified and inexpensive solution for implementing remote control of drilling rigs 1 is provided. Since the same network, or method for transmitting data, is used throughout the system, the use of a same interface, regardless of the working station or location of the working station, may easily be implemented. That is, the operator 3 of the drilling rig 1 located in the control centre 2 uses the same interface, or MMI (Man Machine Interface), as a person working at an ordinary personal computer in an office. This has the advantage of providing the users with a familiar and uniform interface. Further, it is more convenient and cost-effective to have the same interface throughout the system for maintenance reasons as well.

In one embodiment a standardised format is used, such as for example HTML or XML. Thus a commonly available web browser can be used, for example Internet explorer or Netscape. Further, only subsets of the information may be shown to a specific user. For example, if a user is only interested in failure reports, his or her interface may be set to only show the information of interest. The information transmitted and shown to a specific user may also be dependent on the capacity of the user's terminal. If the user only has access to a PDA (Personal Digital Assistant) with a rather limited bandwidth, a subset of the information may be transmitted to it.

There are several possible alterations and modifications of the present invention. For example, it is conceivable to exclude the use of a CAN bus between the drilling rig and a CCI interface and between a CCI interface and the control centre respectively, giving a system using Ethernet all the way.

Further, Ethernet is the preferred data communication method to be used, but other data communication methods may be used as well, such as Token Ring or the like.

## Claims

1. A system for remote control of drilling rigs (1), said remote control being performed in a from the drilling rig (1) remotely located control centre (2) **characterised in that** said system includes a control unit (11) arranged to control the data communication between the remotely located control centre (2) and said drilling rig (1) as well as other traffic occurring within the system, wherein said other traffic occurring within the system is directed to and/or from the remotely located control centre and to and/or from the drilling rig.

2. System as claimed in claim 1, wherein said control unit (11) is arranged to give priority to traffic between the remotely located control centre (2) and the drilling rig (1).

3. System as claimed in claim 1, wherein said control unit (11) is arranged to deny other traffic when there is traffic between the remotely located control centre (2) and the drilling rig (1).

4. System as claimed in any of the preceding claims, wherein said system is arranged to utilise a standardised data communication method for communication between the remotely located control centre (2) and the drilling rig (1).

5. System as claimed in claim 4, wherein said system is connected to other networks (9) utilising the same said standardised data communication method.

6. System as claimed in claim 4 or 5, wherein said standardised data communication method is one of the following: Ethernet and Token ring.

7. System as claimed in any of the preceding claims, wherein said control unit (11) gives priority to control commands over other traffic between the remotely located control centre (2) and the drilling rig (1).

8. System as claimed in claim 7, wherein said other traffic between the remotely located control centre (2) and the drilling rig (1) comprises image and/or sound data relating to the drilling rig (1).

9. System as claimed in any of the preceding claims, wherein said control unit (11) is a server.

10. A control unit for use in a system for remote control of drilling rigs (1), said remote control being performed in a control centre (2) remotely located from the drilling rig (1) **characterised in that** said control unit (11) is arranged to control the data communication between the remotely located control centre (2) and the drilling rig (1) as well as other traffic occurring within the system, wherein said other traffic occurring within the system is directed to and/or from the remotely located control centre and to and/or from the drilling rig.

11. Control unit as claimed in claim 10, wherein the control unit (11) is arranged to give priority to traffic between the remotely located control centre (2) and the drilling rig (1).

12. Control unit as claimed in claim 10 or 11, wherein the control unit (11) is arranged to deny other traffic when there is traffic between the remotely located control centre (2) and the drilling rig (1).

## Patentansprüche

1. System zur Fernsteuerung von Bohranlagen (1), wobei die Fernsteuerung in einem von der Bohranlage (1) entfernt lokalisiertem Steuerzentrum (2) durchgeführt wird, **dadurch gekennzeichnet, dass** das System eine Steuereinheit (11) beinhaltet, die angeordnet ist, um die Datenkommunikation zwischen dem entfernt lokalisierten Steuerzentrum (2) und der Bohranlage (1), sowie anderen Verkehr, der innerhalb des Systems auftritt, zu steuern, worin der andere auftretende Verkehr innerhalb des Systems zum und/oder vom entfernt lokalisierten Steuerzentrum und zu der und/oder von der Bohranlage gerichtet ist.

2. System wie in Anspruch 1 beansprucht, worin die Steuereinheit (11) angeordnet ist, um dem Verkehr zwischen dem entfernt lokalisierten Steuerzentrum (2) und der Bohranlage (1) Priorität zu verleihen.

3. System wie in Anspruch 1 beansprucht, worin die Steuereinheit (11) angeordnet ist, um anderen Verkehr abzulehnen, wenn Verkehr zwischen dem entfernt lokalisierten Steuerzentrum (2) und der Bohranlage (1) existiert.

4. System wie in irgendeinem der vorhergehenden Ansprüche beansprucht, worin das System angeordnet ist, um ein standardisiertes Datenkommunikationsverfahren zur Kommunikation zwischen dem entfernt lokalisierten Steuerzentrum (2) und der Bohranlage (1) zu verwenden.

5. System wie in Anspruch 4 beansprucht, worin das System mit anderen Netzwerken (9) verbunden ist, die das gleiche standardisierte Datenkommunikationsverfahren verwenden.

6. System wie in Anspruch 4 oder 5 beansprucht, worin das standardisierte Datenkommunikationsverfahren eines der folgenden ist: Ethernet und Tokenring.

7. System wie in irgendeinem der vorhergehenden Ansprüche beansprucht, worin die Steuereinheit (11) Steuerbefehlen gegenüber anderem Verkehr zwischen dem entfernt lokalisierten Steuerzentrum (2) und der Bohranlage (1) Priorität verleiht.

8. System wie in Anspruch 7 beansprucht, worin der andere Verkehr zwischen dem entfernt lokalisierten Steuerzentrum (2) und der Bohranlage (1) Bild- und/oder Tondaten in Bezug auf die Bohranlage (1) umfasst.

9. System wie in irgendeinem der vorhergehenden Ansprüche beansprucht, worin die Steuereinheit (11) ein Server ist.

10. Steuereinheit zur Verwendung in einem System zur Fernsteuerung von Bohranlagen (1), wobei die Fernsteuerung in einem Steuerzentrum (2) durchgeführt wird, das von der Bohranlage (1) entfernt lokalisiert ist, **dadurch gekennzeichnet, dass** die Steuereinheit (11) angeordnet ist, um die Datenkommunikation zwischen dem entfernt lokalisierten Steuerzentrum (2) und der Bohranlage (1), sowie anderen Verkehr, der innerhalb des Systems auftritt, zu steuern, worin der andere auftretende Verkehr innerhalb des Systems zum und/oder vom entfernt lokalisierten Steuerzentrum und zu der und/oder von der Bohranlage gerichtet ist.

11. Steuereinheit wie in Anspruch 10 beansprucht, worin die Steuereinheit (11) angeordnet ist, um dem Verkehr zwischen dem entfernt lokalisierten Steuerzentrum (2) und der Bohranlage (1) Priorität zu verleihen.

12. Steuereinheit wie in Anspruch 10 oder 11 beansprucht, worin die Steuereinheit (11) angeordnet ist, um anderen Verkehr abzulehnen, wenn Verkehr zwischen dem entfernt lokalisierten Steuerzentrum (2) und der Bohranlage (1) existiert.

## Revendications

1. Système de commande à distance d'appareils de forage (1), ladite commande à distance étant exécutée dans un centre de commande (2) situé à distance de l'appareil de forage (1), **caractérisé en ce que** ledit système comprend une unité de commande (11) prévue pour commander la communication de données entre le centre de commande (2) situé à distance et ledit appareil de forage (1), ainsi qu'un autre trafic ayant lieu à l'intérieur du système, dans lequel ledit autre trafic, ayant lieu à l'intérieur du système, est destiné au centre de commande situé à distance et/ou provient de celui-ci, ainsi que destiné à l'appareil de forage et/ou provenant de celui-ci.

2. Système selon la revendication 1, dans lequel ladite unité de commande (11) est prévue pour accorder la priorité au trafic entre le centre de commande (2) situé à distance et l'appareil de forage (1).

3. Système selon la revendication 1, dans lequel ladite unité de commande (11) est prévue pour interdire un autre trafic, lorsqu'il existe un trafic entre le centre de commande (2) situé à distance et l'appareil de forage (1).

4. Système selon l'une quelconque des revendications précédentes, dans lequel ledit système est prévu pour utiliser un procédé normalisé de communication de données pour une communication entre le centre de commande (2) situé à distance et l'appareil de forage (1).

5. Système selon la revendication 4, dans lequel ledit système est relié à d'autres réseaux (9) utilisant le même procédé normalisé de communication de données.

6. Système selon la revendication 4 ou 5, dans lequel ledit procédé normalisé de communication de données est l'Ethernet ou réseau en anneau à jeton.

7. Système selon l'une quelconque des revendications précédentes, dans lequel ladite unité de commande (11) accorde la priorité à des instructions de commande par rapport à un autre trafic entre le centre de commande (2) situé à distance et l'appareil de forage (1).

8. Système selon la revendication 7, dans lequel ledit autre trafic entre le centre de commande (2) situé à distance et l'appareil de forage (1) comprend des données vidéo et/ou audio concernant l'appareil de forage (1).

9. Système selon l'une quelconque des revendications précédentes, dans lequel ladite unité de commande (11) est un serveur.

10. Unité de commande prévue pour une utilisation dans un système de commande à distance d'appareils de forage (1), ladite commande à distance étant exécutée dans un centre de commande (2) situé à distance de l'appareil de forage (1), **caractérisée en ce que** ladite unité de commande (11) est prévue pour commander la communication de données entre le centre de commande (2) situé à distance et ledit appareil de forage (1), ainsi qu'un autre trafic ayant lieu à l'intérieur du système, dans lequel ledit autre trafic, ayant lieu à l'intérieur du système, est destiné au centre de commande situé à distance et/ou provient de celui-ci, ainsi que destiné à l'appareil de forage et/ou provenant de celui-ci.

11. Unité de commande selon la revendication 10, dans laquelle l'unité de commande (11) est prévue pour accorder la priorité au trafic entre le centre de commande (2) situé à distance et l'appareil de forage (1).

12. Unité de commande selon la revendication 10 ou 11, dans laquelle l'unité de commande (11) est prévue pour interdire un autre trafic, lorsqu'il existe un trafic entre le centre de commande (2) situé à distance et l'appareil de forage (1).
